(19) Europäisches Patentamt
European Patent Office
Office européen des brevets

(11) EP 0 985 957 A1

(12) EUROPEAN PATENT APPLICATION

(43) Date of publication:
15.03.2000 Bulletin 2000/11

(51) Int. Cl.⁷: **G03B 7/099**, G03B 7/16

(21) Application number: 99117701.5

(22) Date of filing: 08.09.1999

(84) Designated Contracting States:
**AT BE CH CY DE DK ES FI FR GB GR IE IT LI LU MC NL PT SE**
Designated Extension States:
**AL LT LV MK RO SI**

(30) Priority: 10.09.1998 JP 25677398
02.06.1999 JP 15482399

(71) Applicant: **KONICA CORPORATION**
**Tokyo 163 (JP)**

(72) Inventors:
• **Kibayashi, Hiroshi**
**Hino-shi, Tokyo (JP)**
• **Hosaka, Takao**
**Hino-shi, Tokyo (JP)**
• **Masuda, Takuro**
**Hino-shi, Tokyo (JP)**

(74) Representative:
**Türk - Gille - Hrabal - Struck**
**Patentanwälte - European Patent Attorneys,**
**Brucknerstrasse 20**
**40593 Düsseldorf (DE)**

(54) **Fixed focus camera**

(57) A fixed focus camera equipped with a strobe, comprises a strobe circuit (40) including a voltage raising circuit, a strobe light emitting circuit having a trigger circuit, a main capacitor, and a strobe light emitting tube, a light receiving element (10) to receive light reflected from an object when the strobe light emitting tube emits light and to generate a light receiving signal, and a strobe light emission stopping circuit (43) to stop light emission from the strobe light emitting tube on the basis of the light receiving signal generated by the light receiving element.

FIG. 1

EP 0 985 957 A1

Description

## BACKGROUND OF THE INVENTION

This invention relates to a fixed focus camera such as a camera of an integrated type with a film which incorporates an unexposed roll film in the assembly process of the camera body beforehand for marketing (a lens-fitted film unit), the fixed focus camera having a strobe-unit built-in within the camera body, and in particular, to a fixed focus camera with a strobe-unit which is capable of automatically adjusting the amount of exposure.

A camera of the film-integrated type with a strobe-unit which is on the market at present is equipped with a strobe-unit having a comparatively large guide number, and is capable of conducting strobe-photography up to the distance of about four meters.

However, if the strobe-unit is the one emitting a fixed amount of light, a photograph produced by an excess of exposure or by an insufficient exposure is to be obtained; hence, cameras with a price higher than a certain level are equipped with a CPU for the automatic adjustment of light emission amount, or have a structure such that the user can manually adjust the light emission amount. However, as a fixed focus camera such as a camera of the film-integrated type, which is subjected to a severe limitation in price, none can adjust the amount of light emission of the strobe-unit. In particular, in the strobe-photography at a short distance of about one meter, it is obtained a failure-photograph wherein the object to be photographed becomes whitened owing to the excess of exposure and the surrounding of the object to be photographed are made deep-black.

## SUMMARY OF THE INVENTION

Therefore, it is an object of this invention to provide at a low price a fixed focus camera with a strobe-unit capable of obtaining a photograph by a correct exposure by automatically adjusting the amount of light emission of the strobe-unit particularly in the case where photographing is done at a shorter distance than that for the full capacity of its guide number.

The above object can be attained by a fixed focus camera having the following structure.

A fixed focus camera equipped with a strobe, comprises:

a strobe circuit including

a voltage raising circuit,
a strobe light emitting circuit having a trigger circuit, a main capacitor, and a strobe light emitting tube,
a light receiving element to receive light reflected from an object when the strobe light emitting tube emits light and to generate a light receiving signal, and
a strobe light emission stopping circuit to stop light emission from the strobe light emitting tube on the basis of the light receiving signal generated by the light receiving element.

Further, the above object may be attained by a fixed focus camera having the following preferable structure.

A fixed focus camera is equipped with a strobe-unit, wherein a strobe circuit of said strobe-unit has at least a voltage raising circuit, a trigger circuit, a strobe light emitting circuit having a main capacitor and a strobe light emitting tube, a photo-sensor receiving the reflected light from a object to be photographed, and a strobe light emission stopping circuit for stopping the light emission of the strobe light emitting tube on the basis of the light receiving signal from said photo-sensor.

Further, the above-described fixed focus camera is a camera of the film-integrated type wherein an unexposed roll film is incorporated beforehand in the assembly process of the camera body; the aforesaid strobe light emission stopping circuit is a circuit which intercepts the supply of the electric current from the main capacitor to the strobe light emitting tube on the basis of the light receiving signal from the photo-sensor.

Further, the aforesaid strobe circuit is composed of a printed board on one side of which circuit patterns are printed and electrical parts for the strobe-unit attached to said printed board; a voltage transformer is fitted to the printed board, being projected out of the other side of the printed board opposite to the circuit patterns, while the photo-sensor is fitted to the printed board in a manner such that at least the light-receiving surface of it is exposed out of the surface of said one side of the printed board.

Furthermore, a light introducing hole for introducing the reflected light from a object to be photographed is provided in the front cover of the camera body which covers the aforesaid printed board, facing the light receiving surface of the photo-sensor.

## BRIEF DESCRIPTION OF THE DRAWINGS

Fig. 1 is a drawing of a strobe circuit used in a camera of the film-integrated type showing an example of the first embodiment of this invention;
Fig. 2 is the front view of the camera of the film-integrated type showing an example of the first embodiment of this invention;
Fig. 3 is the plan of a partial cross-sectional view of the camera of the film-integrated type showing an example of the first embodiment of this invention;
Fig. 4 is the front view of a printed board for a strobe-unit showing an example of the first embodiment of this invention;
Fig. 5 is the rear view of the printed board for the strobe-unit showing an example of the first embodiment of this invention;
Fig. 6 is the front view of a printed board for a strobe-unit showing an example of the second embodiment of this invention;
Fig. 7 is the plan of a cross-sectional view of an essential portion of a camera of the film-integrated type showing the second embodiment of this invention; and
Fig. 8 is the plan of a cross-sectional view of an essential portion of a camera of the film-integrated type showing the third embodiment of this invention.
Fig. 9 is a drawing of a strobe circuit of a type such that an electric current is let to flow in a member other than a strobe-emitting tube.

## DETAILED DESCRIPTION OF THE PREFERRED EMBODIMENT

In the following, each of the embodiments applied to a camera of the film-integrated type, as a fixed focus camera of this invention, will be explained with reference to the drawings.

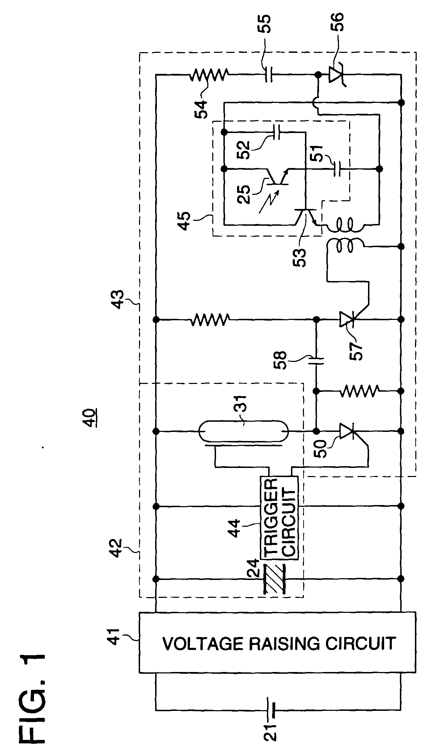

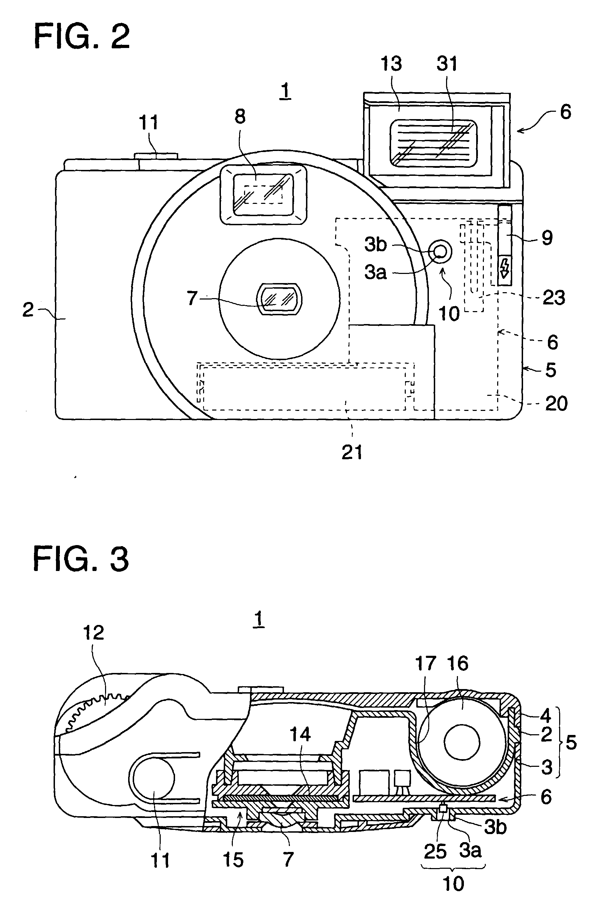

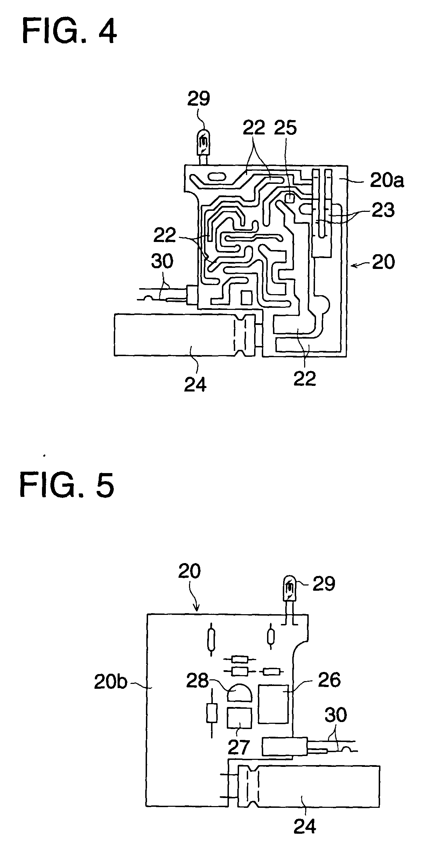

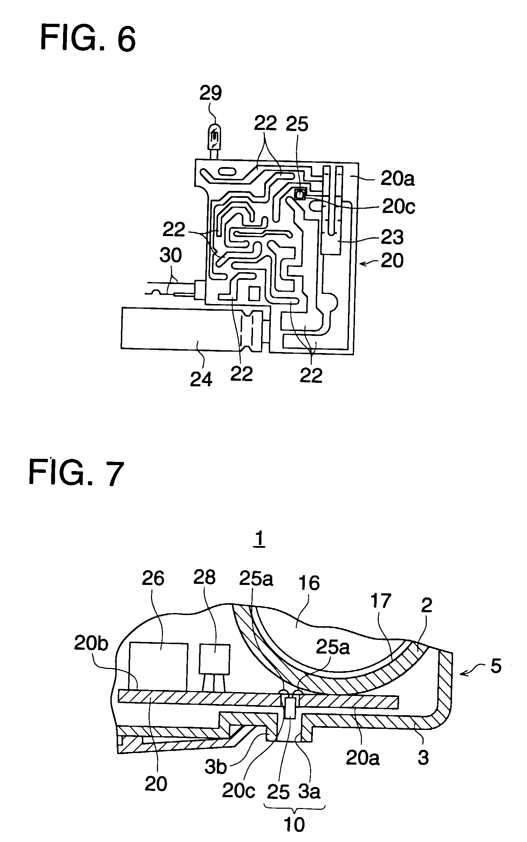

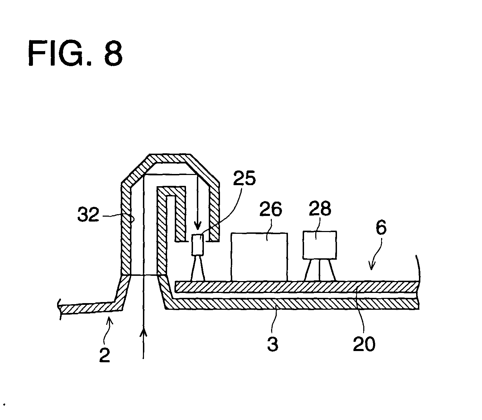

Among the drawings, Fig. 1 to Fig.5 show the first embodiment of this invention; Fig. 1 is a drawing of a strobe circuit, Fig. 2 is the plan of a camera of the film-integrated type, Fig. 3 is the plan of a partial cross-sectional view of the same, Fig. 4 is the front view of a printed board for a strobe-unit, and Fig. 5 is the rear view of the same. Fig. 6 and Fig. 7 show the second embodiment of this invention; Fig. 6 is the front view of a printed board for a strobe-unit, and Fig. 7 is the plan of a cross-sectional view of an essential portion of a camera of the film-integrated type. Further, Fig. 8 is the plan of a cross-sectional view of an essential portion of a camera of the film-integrated type showing the third embodiment of this invention.

The camera of the film-integrated type 1 as an example of the first embodiment shown in Fig. 1 to Fig. 5 is a camera of a simple type with a strobe-unit, which is equipped with the strobe-unit 6 in the camera body 5 which is made up by assembling the case body 2, the front cover 3, and the rear cover 4 all made of a synthetic resin, and is loaded with an unexposed roll film (not shown in the drawings) beforehand in the assembly process of said camera body 5 for distributing and marketing; at the front side of the camera body 5, the photographing lens 7, the finder window 8, the actuator for the strobe-switch 9, and the reflected light receiving section 10 are provided, and in the upper side portion of the camera body 5, there are provided the shutter releasing button 11, the winding up knob of a dial type 12, and the strobe-emitting section of a leaping-up type 13.

At about central portion of the inside of the camera body 5, the shutter unit 15 having the shutter leaves 14 built-in is disposed, and in the film loading room 16, which is positioned at the right side of said shutter unit 15 and formed between the case body 2 and the rear cover 4, the film cartridge 17 is received. At the front side of the shutter unit 15, the above-mentioned photographing lens 7 is fitted fixedly at a predetermined distance from the film surface, the structure being made up in a manner such that the movement of the photographing lens in the direction of the optical axis for the purpose of adjusting the focus to the film surface can not be done.

In the front side portion of the film loading room 17, the printed board 20 for the strobe-unit 6 is arranged in the longitudinal direction between the case body 2 and the front cover 3, and the battery 21 is disposed in the part under said printed board 20 and the shutter unit 15; the aforesaid strobe-unit 6 is composed of the strobe-switch actuator 9, the reflected light receiving section 10, the strobe-emitting section 13, the printed board 20, and the battery 21.

The printed board 20 has a plurality of circuit patterns 22 printed on one side of it 20a, which is positioned facing toward the front cover 3 of the camera body 5, and on both of this one side 20a and the other side 20b which is positioned facing toward the case body 2 of the camera body 5, there are attached a number of electrical parts for the strobe-unit such as the main switch 23 and the main capacitor 24.

Each of the electrical parts for the strobe-unit is connected to the circuit patterns 22 with its connecting terminal using a metallic wire, and to the one side 20a of the printed board 20, there are attached the main switch 23, which keeps contacting relationship with the strobe-switch actuator 9, and the photo-sensor (light receiving element) 25 of the reflected light receiving section 10; the rest of the electrical parts for the strobe-unit except for these main switch 23 and photo-sensor 25 such as the voltage transformer 26, trigger coil 27, the diode 28, and the indicator lamp 29 are put together and attached to the other side 20b of the printed board 20.

That is, on the rear side of the printed base board (the opposite side to the direction toward the photographing lens of the fixed focus camera) are provided a transformer, a trigger coil, a diode, and an indicator lamp.

Among the electrical parts for the strobe-unit which are attached to the other side 20b of the printed board 20, the main capacitor 24 having a large capacity, the indicator lamp 29 which is disposed close to the inner wall of the camera body 5, and the trigger switch 30 operating in connected relation with the shutter leaves 14 are disposed in such a manner as to be projected to the sideward direction out of the printed board 20; they are accommodated in the suitable space inside the camera body 5 together with the voltage transformer 26, the trigger coil 27 and so forth which are attached in a standing position on the other side 20b of the printed board 20.

The reflected light receiving section 10 is provided for the purpose of stopping the emitting operation of the strobe light emitting tube 31 if the reflected light amount from a object to be photographed which is received by it has a larger amount than a certain definite value at the time of strobe-photography wherein the strobe light emitting tube 31 in the strobe-emitting section 13 emits light, and is composed of the aforesaid photo-sensor 25 attached to the one side of the printed board 20 and the light introducing hole 3a of a small circular shape bored in the front cover 3 of the camera body 5 at a position facing the photo-sensor 25. The circumference of the light introducing hole 3a is surrounded by the light intercepting wall 3b, in order that the penetration of unnecessary light may be limited in measuring the reflected light; further, inside the light introducing hole 3a, the light receiving surface at the end of the photo-sensor 25 is disposed, being projected into the hole, in order that the reflected light from the object to be photographed taken into the light introducing hole 3a may reach the light receiving surface of the photo-sensor 25 more reliably.

The strobe circuit of the present invention receives the reflected light from an object at the time of strobe photography by the light receiving element, and when the light receiving element generates a light receiving signal indicating the condition that the amount of the reflected light becomes more than a predetermined value, the strobe light emission stopping circuit stops light emission from the light emitting tube. In other words, the strobe circuit adjusts a light emitting time period of the strobe light emitting tube, whereby the light emission amount is adjusted so as to conduct the photographing appropriately.

The strobe-emission made by using the strobe-unit 6 and the automatic strobe-emission adjustment for controlling this are carried out by using the strobe circuit 40 shown in Fig. 1. This strobe circuit 40 is equipped with the voltage raising circuit 41 which raises the power source voltage from the battery 21 to a voltage required for the emission of the strobe light emitting tube 31, the strobe-emission circuit 42 which makes the strobe light emitting tube 31 emit light by charging the main capacitor 24 with the high voltage from said voltage raising circuit 41, and the strobe light emission stopping circuit 43 which controls automatically the light emission amount of the strobe light emitting tube 31 by taking in the reflected light from the object to be photographed using the reflected light receiving section 10 at the time of strobe-photography.

The strobe-emission circuit is made up of the combination of the above-described main capacitor 24, the strobe light emitting tube 31, and the trigger circuit 44 which excites the emission of the strobe light emitting tube 31 in synchronism with the operation to press the shutter releasing button 11. The voltage raising circuit 41 and the trigger circuit 44 are made up of the publicly known combination of the printed wiring and the electrical parts for the strobe-unit, which is used in a camera with a strobe-unit of this kind; the above-described voltage transformer 26 is built in the voltage raising circuit 41 as one of the electrical parts for the strobe-unit, and the above-described trigger coil 27 and the trigger switch 30 are also built in the trigger circuit 44 as the electrical parts for the strobe-unit.

In the strobe light emission stopping circuit 43, there are provided the thyristor 50 which controls the emission of the strobe light emitting tube 31 and the light measuring circuit 45 which sends an output signal when the photo-sensor 25 of the reflected light receiving section 10 receives the reflected light having an amount larger than a predetermined value. This light measuring circuit 45 is composed of the above-described photo-sensor 25, the capacitor for integration connected serially to this, the small-capacity capacitor 52 connected parallel to the photo-sensor 25, and the transistor 53, in order that an output signal is sent out from the light measuring circuit 45 by operating the transistor 53, when it reaches a predetermined value the integrated signal value by the capacitor for integration 51 converted from the reflected light from the object to be photographed taken in the photo-sensor 25 from the light introducing hole 3a of the reflected light receiving section 10.

The supply of electric power to the light measuring circuit 36 is made by the resistor 54 which is connected parallel to the strobe light emitting tube 31 and the thyristor 50, the capacitor 55, and the zener diode 56; when a voltage is generated on the zener diode 56 by the emission of the strobe light emitting tube 31, it is made the operation such that the charging of some amount is done from the small-capacity capacitor 52 to the capacitor for integration 51 in order that the rise up of the integration by the strobe light emitting tube to be made next may be improved.

The transistor 53 operates when the integrated value reaches the predetermined value as described in the above to send an output signal from the light measuring circuit 45. The output signal from the light measuring circuit 45 enters in the gate of the thyristor 57 for turning off the thyristor 50 to actuate it, making the capacitor for deviating the current 58 discharge to give the thyristor 50 a reversed voltage. As a result of this, the supply of the electric current from the main capacitor 24 to the strobe light emitting tube 31 is intercepted and the emission of the strobe light emitting tube 31 is stopped.

That is, in this embodiment, the strobe light emission stopping circuit is a type of a circuit to cut off an electric current fed from a main capacitor to a strobe light emitting tube on the basis of the light receiving signal of the light receiving element. However, an embodiment of the strobe light emission stopping circuit is not limited to the above embodiment. As stated later, the strobe light emission stopping circuit may be a type of a circuit to make the electric current which is expected to flow from the main capacitor to the strobe light emitting tube so as to flow from the main capacitor to another member other than the strobe light emitting tube so as to stop light emission from the strobe light emitting tube on the basis of the light receiving signal of the light receiving element.

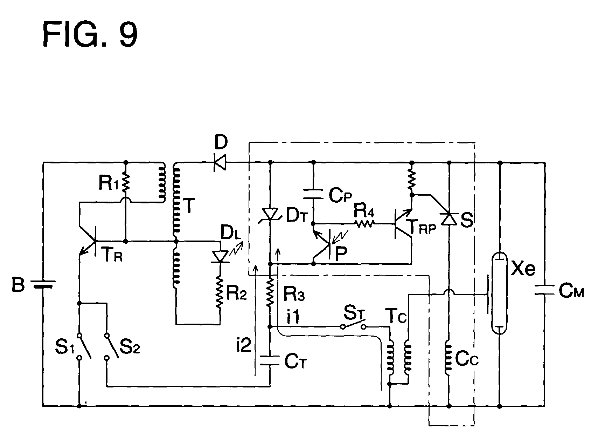

In the following, with reference to the drawing of a strobe circuit in Fig. 9, it will be explained a strobe circuit of a type such that an electric current is let to flow in a member other than a strobe-emitting tube.

In Fig. 9, when the main switches $S_1$ and $S_2$ is turned on by an operation from outside, the electric current from the battery B is let to flow in the transistor $T_R$ through the resistor $R_1$ to start oscillating, and the secondary side of the oscillation transformer T is raised to a high voltage of 300 - 350 V. The electric current of this secondary side is rectified by the diode D, and charges the trigger capacitor $C_T$ which is connected serially to the resistor $R_3$ and the main capacitor $C_M$. When the main capacitor $C_M$ is charged to a predetermined voltage, the light emitting diode $D_L$ connected serially to the resistor $R_2$ is lit.

At the time of photographing, the trigger switch $S_T$ is turned on by an interlocked action with the opening motion of the shutter leaves. Owing to this, the trigger capacitor $C_T$, the trigger switch $S_T$, the primary side of the trigger transformer $T_C$, and the main switches $S_1$ and $S_2$ form a closed circuit, and the electric charge stored in the trigger capacitor $C_T$ is discharged to the primary side of the trigger transformer $T_C$. As a result of this, a higher voltage is generated in the secondary side of the trigger transformer $T_C$, and it is applied to the trigger electrode of the xenon tube Xe; hence, the ionized xenon atoms in the xenon tube Xe collide with the electrons emitted from the cathode and are excited, and the xenon tube Xe emits light accompanied with the discharging of the main capacitor $C_M$.

When the trigger capacitor $C_T$ is discharged, the electric current $i_1$ is let to flow in the resistor $R_3$ through the primary side of the trigger transformer $T_C$, and the electric current $i_2$ is let to flow in the resistor $R_3$ to charge the trigger capacitor $C_T$. In this embodiment, because the resistor $R_3$ and the Zener diode $D_T$ which is connected serially with its cathode positioned at the resistor $R_3$ side, the electric current $i$ which is the sum of the current $i_1$ and the current $i_2$ is let to flow in the Zener diode $D_T$.

Now, the photo-sensor P and the capacitor $C_P$ which are mutually connected serially are parallel connected to the Zener diode $D_T$. The connecting portion of the photo-sensor P and the capacitor $C_P$ is connected to the base of the transistor $T_{RP}$ through the resistor $R_4$, and the emitter of the transistor $T_{RP}$ is connected to the gate of the thyristor S. The thyristor S is serially connected to the choke coil $C_C$ used as a damper, and these are connected parallel to the xenon tube Xe. Accordingly, when the thyristor S is made on, an electric current which is larger than the electric current flowing in the xenon tube is let to flow in the choke coil $C_C$, and the charge in the main capacitor $C_M$ is rapidly exhausted, which lets the xenon tube cease emitting light.

When the electric current $i$ is let to flow in the Zener diode $D_T$ to generate a voltage, an electric current is let to flow in the photo-sensor P in accordance with the intensity of the strobe light reflected by the photographic object. If the photographing distance is short, the strobe light reflected by the photographic object is strong, and the electric current which is let to flow in the photo-sensor P is made large. Accordingly, the charging of the capacitor $C_P$ is made rapidly. On the contrary, if the photographic distance is long, the strobe light reflected by the photographic object is weak, and the electric current which is let to flow in the photo-sensor is made small. Accordingly, the charging of the capacitor $C_P$ is made slowly.

As a result of this, if the distance is short, the transistor $T_{RP}$ is turned on early, and the thyristor S is also turned on early; hence, the charge in the main capacitor $C_M$ is rapidly exhausted by the choke coil $C_C$ in the process of light emission of the xenon tube, and the xenon tube ceases emitting light in a shorter period. On the contrary, if the distance is long, the transistor $T_{RP}$ is turned on late, and the thyristor S is also turned on late; hence, the xenon tube ceases emitting light in a longer period. Accordingly, even though the stop value is kept constant, the total amount of strobe light emission is varied in accordance with the photographing distance; hence, a constant exposure amount is always given.

In this embodiment, as described in the above, the reflected light from a object to be photographed is received by the photo-sensor 25 of the reflected light receiving section 10 at the time of strobe-photography using the strobe-unit 6, and if this reflected light has a larger amount than a predetermined value, the emitting operation of the strobe light emitting tube 31 is automatically stopped by the strobe light emission stopping circuit 43; hence, in the case where the strobe-photography is done at a distance shorter than that corresponding to the capability for the guide number of the strobe-unit 6, a photograph taken by a suitable exposure without over-exposing can be obtained. Further, because of the comparatively simple structure dispensing with a CPU of high cost, it is possible to bring it into practical use at low cost.

Further, because the light introducing hole 3a, which, together with the photo-sensor 25, makes up the reflected light receiving section 10, is provided in the front cover 3 of the camera body 5 at a position facing the light receiving surface of the photo-sensor 25, the reflected light from a object to be photographed is reliably received and the emission control of the strobe-unit which is highly favorable for obtaining a photograph taken by a suitable exposure can be performed. Further, in this embodiment, because the penetration of unnecessary light into the light introducing hole 3a is limited by surrounding the circumference of the light introducing hole 3a with the light intercepting wall 3b, the reflected light from a object to be photographed is more precisely received by the photo-sensor 25 and it becomes possible to obtain a photograph taken by a more desirable exposure.

Further, the strobe circuit 40 is composed of the printed board 20, on the one side of which 20a the circuit patterns 22 are printed, and the electrical parts for the strobe-unit to be attached to said printed board 20, and on the one side 20a of the printed board 20 which is disposed at a position facing the front cover 3 of the camera body 5, there are provided only the main switch 23 and the photo-sensor 25 of the reflected light receiving section 10, while the indicator lamp 29, trigger switch 30, and the main capacitor 24 are disposed in a manner projecting to the sideward direction, and the rest of the electrical parts for the strobe-unit except for these such as the voltage transformer 26, the trigger coil 27, and the indicator lamp 29 are fitted to the other side 20b of the printed board 20, which is the reverse side of the circuit patterns facing toward the front side of the camera body 5, being projected out of it; hence, the one side 20a of the printed board 20, out of the surface of which the parts for making up the strobe-unit are less projected, can be disposed close to the front cover 3 of the camera body 5. As a result of this, a camera of film-integrated type 1 with a slim body suppressed in the thickness in the depth direction can be obtained.

Further, assuming a luminance difference at a photography in which EV value of a back ground is 9 or less between a luminance of a main object in a strobe photography and a luminance of a back ground capable of forming a printable latent image on film, it may be preferable that the strobe circuit adjusts strobe light such that the luminance difference is made 4.5 or less as EV value on the incorporated film.

In this embodiment, assuming that ISO-800 type film is incorporated, a stop value in T number at the time of strobe-photographing is 7.3 and a guide number is 10 at the time that the strobe emits its full amount of light, the following is explained.

The EV value in the case where a film having a speed of ISO 100 is used is expressed by the following equation:

$$EV = \log(F^2/T)/\log 2,$$

where F is the T number of the photographing lens and T is the shutter speed (expressed in second) at the time of photographing.

Further, the EV value converted into the EV value in the case where a film having a speed of ISO 100 is used, with the ISO speed (S) of the film which has been loaded beforehand taken into consideration, is given by the following equation:

$$EV = [\log_{10}F^2 + \log_{10}(1/T) - \log_{10}(S/100)]/\log_{10}2.$$

Accordingly, in this specification, the EV value converted into the EV value in the case where a film of ISO 100 is used is let to be the EV value for the standard exposure amount.

In this embodiment, in a strobe-photographing where a strobe light is used, supposing that the stop value in T number is 7.3, the guide number 10 for the film of ISO 100 at full emission is converted into 28.3 for the film speed of ISO 800. Accordingly, the photographing distance for a correct exposure at full emission is 28.3/7.3 = 3.9 (m). That is, if an 18% reflection plate, which is generally called a standard reflection plate and has a reflectance of 18% determined on the basis of the reflectance of the skin of an average person, is placed at a distance of 3.9 m, this reflection plate is exposed to a correct exposure light amount.

Further, if insufficiency of exposure by up to EV 1.5 is allowed, the maximum photographing distance becomes 6.5 m. Accordingly, even with a strobe unit with an automatic emission control function which is such a small-sized one as to have a guide number of 10 at full emission, a sufficient photographing distance can be given.

On the other hand, in strobe-photographing, with regard to the background which the strobe-light can not reach, the amount of exposure is determined by only the stop value of 7.3 in T number and the shutter speed of 1/80 (sec); hence, the EV value in the case where a film of ISO 100 is used is given as EV 12.1 from the above-described equation, however, because the film is of ISO 800, the EV value for the standard exposure amount is substantially EV 9.0.

Therefore, for a background farther than the maximum photographing distance in a strobe-photographing, an exposure is made in standard exposure amount of EV value 9.0; further, because the photographic film has a latitude of EV value 1.5 to the shorter exposure side, the background in the finished photograph is not filled in to a solid black up to an EV value of 7.5 which is smaller than conventional one.

Further, the nearest photographing distance is usually determined to be 1 m in a film unit with a lens attached; the exposure amount of a photographic object by a strobe light in the case where a strobe-photographing is done for a photographic object of 18% reflection plate at 1 m is made to be equivalent to EV 9 by the emission controlling operation of the automatic emission control strobe-unit, and the difference in the amount of exposure between the object and the background is within the latitude of EV 4.5 that a usual photographic paper has; thus, both a background taken by an exposure amount of EV 7.5 and a photographic object at 1 m can be reproduced on a photographic print.

Further, in the case where only a dim landscape in the morning or in the evening is photographed, the strobe-emission can make no effect at all even though it is done; however, by making the stop fully open in the state of strobe-photographing, photographing is done at EV 9.0; hence, a photograph by a correct exposure amount can well be obtained.

When A represents an EV value of the standard exposure which is determined by an aperture value, the shutter speed and sensitivity of the film loaded under the state of photography with strobe, and is converted into the film speed of ISO 100, A is structured so as to satisfy the following condition.

$$A \leq 10$$

Incidentally, an EV value of the standard quantity of light can be obtained from the following expression.

$$EV = [\log_{10}F^2 + \log_{10}(1/T) - \log_{10}(S/100)] / \log_{10}$$

In the expression above, F represents a T-number of a camera lens, T represents a shutter speed (sec), and S represents ISO speed of a film.

Incidentally, it is preferable that T-number F of a camera lens, shutter speed T (sec) and ISO speed S of a film are established respectively from ranges of $F \geq 5.6$, $T = 1/80 - 1/30$ and $S \geq 640$.

Further, it is preferable that a T-number of a camera lens in the course of photography with strobe is set to 9 or less so that capacitor capacity for an electronic flash equipment may be made to be small.

When an automatic light modulation electronic flash equipment to be used is made to be one wherein electronic flash is controlled in accordance with an amount of electronic flash light reflected on a subject, the automatic light modulation electronic flash equipment can be mounted on a lens-fitted film unit which is not made to be complicated. In addition, by using such automatic light modulation electronic flash equipment, latent images of subjects ranging from the shortest distance which is within a depth of field of a camera lens to the distance determined by the guide number for the full flashing of the automatic light modulation electronic flash equipment can be recorded on a film under the mostly same condition. By determining the aperture value and the standard exposure value in the course of photography with strobe so that a brightness difference between a standard reflection plate (18% reflection plate) which is at the distance determined by the guide number and is irradiated by electronic flash light and a background with lowest brightness which can be formed as a latent image which is with brightness equivalent to EV value of 9 or less and is capable of being printed on a film, may become a value equivalent to EV value of 4.5 or less corresponding to the latitude of a photographic paper, on the internally stored film, it is possible to reproduce satisfactorily the main subject and a background on a finished photograph. By making the distance determined by the guide number for the full flashing of the automatic light modulation electronic flash equipment to be 3 m or more, it is possible to modulate light so that a brightness difference between a standard reflection plate which is at the close distance of 2 - 3 m representing an object distance and a background may become EV value of 4.5 or less on the internally stored film.

With regard to the guide number for the full flashing of the automatic light modulation electronic flash equipment, it is advantageous to use greater guide numbers, because it is possible to cover a greater distance for photographing. Incidentally, when considering a size of a lens-fitted film unit, it is preferable to make the upper limit of the guide number to be 20 in the guide number in ISO 100. When considering battery capacity and the time required for charging, the guide number of 12 or less in ISO 100 is preferable.

Under the condition of EV value A in the state of the aforesaid photography with strobe, when the EV value A exceeds 10, it is difficult, in photographing under lighting at night in the state of photography with strobe, to obtain a print wherein a main subject and a background in a large room with brightness of EV 8.5 or less are in the state of excellent exposure. Incidentally, the upper limit of EV value A is preferably 9.5.

The lower limit of EV value A is preferably 4. For setting the standard exposure to be low brightness, it is necessary to use a camera lens with a greater aperture, which, however, is difficult in a lens-fitted film unit which is restricted in terms of cost. It is therefore possible to consider the use of a high speed film to lower the shutter speed. However, the lower shutter speed causes camera-shake, and the limit of the shutter speed which is free from camera-shake is 1/30 in general under the assumption that the focal distance of a camera lens is 30 mm. Therefore, even if a film having the speed of ISO 6400 is loaded, the EV value of 4 is a limit as the standard exposure, because the shutter speed of 1/30 and the aperture value of 5.6 in T-number make EV 3.9.

In summarization of the aforesaid conditions, the preferable EV value A is

$$4 \leq A \leq 10$$

and more preferable one is as follows.

$$4 \leq A \leq 9.5$$

Further, when B represents an EV value converted to the speed of the film with ISO 100 determined by an aperture value in the state of ordinary photographing, a shutter speed and sensitivity of the film loaded, it is preferable to structure so that the following conditions are satisfied.

$$A + 1 \leq B \text{ and } 9 \leq B$$

Further, it is preferable that the upper limit of the EV value B stated above satisfies the relationship with the aforesaid EV value A and it is set to 13 or less.

Next, preferable conditions for a camera lens to be used will be explained. Incidentally, in the following explanation, an aperture value of the camera lens is explained with an F-number, and the relationship between an F-number and a T-number is as follows in the case of the example described later wherein a camera lens is composed of two plastic lenses.

$$T\text{-number } 1.085 \text{ x } F\text{-number}$$

It is preferable that the camera lens to be used is composed of two lens components and a diaphragm, and the following conditional expression is satisfied when $F_0$ represents an open F-number of the camera lens.

$$5.6 < F_0 < 8 \tag{1}$$

It is more preferable that the condition of expression (1) is satisfied and the following conditional expression is satisfied when $\omega$ represents a half field angle of the camera lens and f represents a focal distance.

$$5 < f / (F_0 \cdot \tan \omega) < 7 \tag{2}$$

It is more preferable that the condition of the conditional expression (1) is satisfied, and the following conditional expression is satisfied when SA (F) represents spherical aberration for marginal ray of the camera lens whose F-number is F, and $y_L$ represents a half of the length of a photographed image plane in its longitudinal direction.

$$-0.072 \, y_L < SA \, (F_0/0.7) < -0.024 \, y_L \tag{3}$$

It is more preferable that the condition of the conditional expression (1) is satisfied, and the following conditional expression is satisfied when $F_0$ represents the F-number of the camera lens in the course of photography with strobe, and $F_{off}$ represents the F-number in the course of ordinary photographing.

$$0.4 < F_0/F_{Off} < 0.7 \tag{4}$$

It is more preferable that the conditions of the conditional expressions (1) and (4) are satisfied, and the following conditional expressions are satisfied when SA (F) represents spherical aberration for marginal ray of the camera lens whose F-number is F, and $y_L$ represents a half of the length of a photographed image plane in its longitudinal direction.

$$-0.008 \, F_{Off} \cdot y_L < SA \, (F_0) < -0.003 \, F_{Off} \cdot y_L \tag{5}$$

and

$$-0.072 \, y_L < SA \, (F_0/0.7) < -0.024 \, y_L \tag{6}$$

Each conditional expression in the aforesaid structures will be explained. First, by satisfying the conditional expression (1), it is possible to conduct exposure sufficiently on a subject having low brightness, and to correct spherical aberration and other various aberrations sufficiently even for two lenses, thus an appropriate depth of focus can be obtained.

In the case of a camera lens composed of three lenses, when each lens is not coated with antireflection coatings, transmitted light occupies about 79% of incident light to the lens, and the rate of flare light which is reflected on the refracting interface twice or more and arrives at the image plane occupies 2.2% of the aforesaid transmitted light, which is not preferable. To avoid this, at least one lens needs to be coated with antireflection coatings, which inevitably causes cost increase. On the other hand, in the case of two lenses, transmitted light is sufficient to be about 85% even when antireflection coatings are not provided, and the rate of flare light is about 0.86% of the transmitted light. Therefore, the structure with two lenses is optimum for a camera lens of a lens-fitted film unit when cost and lens performance are considered.

By satisfying the conditional expression (2), it is possible to obtain, on the camera lens having an open F-number of the conditional expression (1), the depth of field which is sufficient for a fixed focus camera.

It is possible to arrange so that the camera lens satisfies the conditional expression (3) with insufficient correction of spherical aberration.

When an F-number of the lens is changed so that the conditional expression (4) is satisfied, over-exposure does not take place even in the open air under a clear sky where brightness of a subject is high, while the F-number is small in the inside of a house where brightness of a subject is insufficient, thus, electronic flash light can reach even when the guide number of an electronic flash equipment is relatively small, and exposure on a subject which is farther than a background can sufficiently be obtained.

When the conditional expression (4) is satisfied and then the camera lens is made to satisfy the conditional expression (3), various aberrations under the open aperture can be corrected satisfactorily as stated earlier.

Further, when the conditional expressions (1) and (4) are satisfied and then the conditional expression (5) is made to be satisfied, an appropriate depth of field can be obtained independently of the usage of an electronic flash equipment.

In the second embodiment shown in Fig. 6 and Fig. 7, the connecting terminals 25a are provided on the other side 20b of the printed board 20, and the photo-sensor 25 is inserted into the through hole 20c of the printed board 20; thus, the light receiving surface at the end of the sensor is positioned inside the light introducing hole 3a which is bored in the front cover 3 of the camera body 5 at such a position as to receive the photo-sensor 25.

In this embodiment, because most part of the photo-sensor is inside the through hole 20c of the printed board 20, and on the one side 20a of the printed board 20, on which the circuit patterns are printed, there is provided only the main switch 23 made of a thin metallic sheet as one of the parts for the strobe-unit, a camera of film-integrated type 1 with a slimmer body more suppressed in the thickness in the depth direction can be obtained, by making the printed board 20 be positioned closer to the front cover 3 of the camera body 5 than the case of the first embodiment.

Besides, in the above-described embodiment, it is shown an example wherein the photo-sensor is disposed inside the through hole in the printed circuit; however, it is possible to make the structure be formed in a manner such that the photo-sensor is projected to the sideward direction with its light receiving surface made to face toward the front cover.

Further, as shown in the third embodiment of Fig. 8, it is possible to make the structure be formed in a manner such that the light conducting path 32 are formed at the front side of the camera body 5 for introducing the reflected light and finishing at least its surfaces which are required to reflect the light to a smooth one, in order that the reflected light is conducted to the light receiving surface of the photo-sensor 25. Furthermore, instead of the light conducting path in the third embodiment, it is possible to conduct the reflected light to the light receiving surface of the photo-sensor by a light guide made of a transparent synthetic resin material.

As described in the foregoing, this invention is capable of being brought into practice as shown in the above-described embodiments; however, it is possible to fit the photo-sensor to the printed board in a manner other than those shown in these embodiments, and as shown in the third embodiment, the light receiving surface does not necessarily face toward the front side of the camera body. Further, it is also possible to make the camera body slimmer with the overall thickness of the strobe-unit suppressed, by making the main portion of the voltage transformer which is attached to the printed board as one of the electric parts for the strobe-unit having a comparatively large volume be projected to the other side of the printed board through a through hole in the printed board, with the connecting terminals provided on the one side of the printed board as in the case of the photo-sensor in the second embodiment.

In addition, in the embodiments described in the foregoing, it has been explained a camera of the film-integrated type of a low price which has been loaded with an unexposed film for marketing beforehand in the assembly process; however, this invention is not limited to this, and can be applied broadly to fixed focus cameras having no focus adjusting mechanism by moving the lens in the optical axis direction with the photographing lens set at a fixed position with regard to the film surface.

As has been explained in the foregoing, in a fixed focus camera of this invention, because the emitting operation of the strobe light emitting tube is automatically stopped by the strobe light emission stopping circuit if the reflected strobe-light from a object to be photographed has a larger amount than a predetermined value, a photograph taken by a suitable exposure without over-exposing can be obtained, even in the case where the strobe-photography is done at a shorter distance than the distance at which a suitable exposure can be given for the guide number which the strobe-unit has. Further, owing to the comparatively simple structure dispensing with a high-cost CPU, bringing it into practice at a low cost is possible, and in particular, it is suitable for a camera of the film-integrated type, which has a severe limitation in the manufacturing cost.

Further, it is possible to make a fixed focus camera have a slim shape with the thickness in the depth direction suppressed by making the one side of printed surface with less projection of the parts making up the strobe-unit be close to the front cover of the camera body.

Furthermore, it becomes possible to receive the reflected light from a object to be photographed reliably at the light receiving surface of the photo-sensor through the light introducing hole; hence, a more favorable control of the strobe-emission can be made in order to obtain a photograph by a suitable exposure.

Disclosed embodiment can be varied by a skilled person without departing from the spirit and scope of the invention.

## Claims

1. A fixed focus camera equipped with a strobe, comprising:

   a strobe circuit including

      a voltage raising circuit,
      a strobe light emitting circuit having a trigger circuit, a main capacitor, and a strobe light emitting tube,
      a light receiving element to receive light reflected from an object when the strobe light emitting tube emits light and to generate a light receiving signal, and
      a strobe light emission stopping circuit to stop light emission from the strobe light emitting tube on the basis of the light receiving signal generated by the light receiving element.

2. The fixed focus camera equipped with a strobe described in claim 1, wherein the fixed focus camera is a lens-fitted film unit in which un-exposed photographic film is incorporated previously.

3. The fixed focus camera equipped with a strobe described in claim 1, wherein the strobe light emission stopping circuit is a circuit to cut off an electric current fed from the main capacitor to the strobe light emitting tube on the basis of the light receiving signal generated by the light receiving element.

4. The fixed focus camera equipped with a strobe described in claim 1, wherein the strobe light emission stopping circuit is a circuit to flow an electric current fed from the main capacitor to a member other than the strobe light emitting tube on the basis of the light receiving signal generated by the light receiving element.

5. The fixed focus camera equipped with a strobe described in claim 1, wherein the strobe circuit further has a printed base board and a transformer provided on the printed base board, and wherein the transformer is provided such that the transformer is protruded from one surface of the printed base board and the light receiving element is provided on the printed base board, and at least a light receiving surface of the light receiving element is exposed from the other surface of the printed base board.

6. The fixed focus camera equipped with a strobe described in claim 1, further comprising a front cover to cover at least a part of the strobe circuit, wherein the front cover has a light receiving hole at a position opposite to a light receiving surface of the light receiving element so that the light reflected from an object passes through the light receiving hole to the light receiving surface of the light receiving element.

7. The fixed focus camera equipped with a strobe described in claim 1, wherein assuming a luminance difference at a photography in which EV value of a back ground is 9 or less between a luminance of a main object at a close distance in a strobe photography and a luminance of a back ground capable of forming a printable latent image on film, the strobe circuit adjusts strobe light such that the luminance difference is made 4.5 or less as EV value on the incorporated film.

# FIG. 1

EP 0 985 957 A1

# FIG. 2

# FIG. 3

# FIG. 4

# FIG. 5

# FIG. 6

# FIG. 7

# FIG. 8

# FIG. 9

European Patent
Office

**EUROPEAN SEARCH REPORT**

Application Number

EP 99 11 7701

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | EP 0 683 421 A (FUJI PHOTO FILM CO LTD) 22 November 1995 (1995-11-22) | 1 | G03B7/099 G03B7/16 |
| A | * abstract; figures 1-3 * | 2-7 | |
| Y | EP 0 662 629 A (NIPPON KOGAKU KK) 12 July 1995 (1995-07-12) | 1 | |
| A | * abstract; figures 1-3 * | 2-7 | |
| A | US 5 752 084 A (KAMEYAMA NOBUYUKI ET AL) 12 May 1998 (1998-05-12) * claims 1-3; figures 1,2 * | 1 | |

TECHNICAL FIELDS
SEARCHED     (Int.Cl.7)

G03B

The present search report has been drawn up for all claims

| Place of search | Date of completion of the search | Examiner |
|---|---|---|
| THE HAGUE | 29 November 1999 | Romeo, V |

CATEGORY OF CITED DOCUMENTS

X : particularly relevant if taken alone
Y : particularly relevant if combined with another
    document of the same category
A : technological background
O : non–written disclosure
P : intermediate document

T : theory or principle underlying the invention
E : earlier patent document, but published on, or
    after the filing date
D : document cited in the application
L : document cited for other reasons

& : member of the same patent family, corresponding
    document

## ANNEX TO THE EUROPEAN SEARCH REPORT
## ON EUROPEAN PATENT APPLICATION NO.                    EP 99 11 7701

This annex lists the patent family members relating to the patent documents cited in the above-mentioned European search report.
The members are as contained in the European Patent Office EDP file on
The European Patent Office is in no way liable for these particulars which are merely given for the purpose of information.

29-11-1999

| Patent document cited in search report | | Publication date | Patent family member(s) | | Publication date |
|---|---|---|---|---|---|
| EP 0683421 | A | 22-11-1995 | JP | 7311410 A | 28-11-1995 |
| | | | JP | 8062675 A | 08-03-1996 |
| | | | JP | 8062677 A | 08-03-1996 |
| | | | JP | 8110567 A | 30-04-1996 |
| | | | JP | 8115796 A | 07-05-1996 |
| | | | JP | 8114836 A | 07-05-1996 |
| | | | CN | 1121188 A | 24-04-1996 |
| | | | US | 5752084 A | 12-05-1998 |
| | | | US | 5854946 A | 29-12-1998 |
| | | | US | 5875357 A | 23-02-1999 |
| EP 0662629 | A | 12-07-1995 | JP | 4000420 A | 06-01-1992 |
| | | | DE | 69113668 D | 16-11-1995 |
| | | | DE | 69113668 T | 09-05-1996 |
| | | | EP | 0450953 A | 09-10-1992 |
| | | | US | 5227836 A | 13-07-1993 |
| US 5752084 | A | 12-05-1998 | JP | 7311410 A | 28-11-1995 |
| | | | JP | 8062675 A | 08-03-1996 |
| | | | JP | 8062677 A | 08-03-1996 |
| | | | JP | 8110567 A | 30-04-1996 |
| | | | JP | 8115796 A | 07-05-1996 |
| | | | JP | 8114836 A | 07-05-1996 |
| | | | CN | 1121188 A | 24-04-1996 |
| | | | EP | 0683421 A | 22-11-1995 |
| | | | US | 5854946 A | 29-12-1998 |
| | | | US | 5875357 A | 23-02-1999 |